Europäisches Patentamt

European Patent Office

Office européen des brevets

(11) Numéro de publication : **0 363 271 B1**

# (12) FASCICULE DE BREVET EUROPEEN

(45) Date de publication du fascicule du brevet :
**23.12.92 Bulletin 92/52**

(51) Int. Cl.⁵ : **F16F 9/32**

(21) Numéro de dépôt : **89402722.6**

(22) Date de dépôt : **03.10.89**

---

(54) **Ressort de compression momobloc.**

---

(30) Priorité : **05.10.88 FR 8813146**

(43) Date de publication de la demande :
**11.04.90 Bulletin 90/15**

(45) Mention de la délivrance du brevet :
**23.12.92 Bulletin 92/52**

(84) Etats contractants désignés :
**AT BE CH DE ES FR GB GR IT LI LU NL SE**

(56) Documents cités :
**DE-A- 3 151 771
DE-B- 1 238 278
DE-B- 1 253 522
DE-U- 8 630 181
FR-A- 969 407
FR-A- 1 052 883
FR-A- 1 265 668
FR-A- 2 188 736**

(56) Documents cités :
**FR-A- 2 537 061
FR-A- 2 559 862
US-A- 3 037 764
US-A- 4 681 304
ATZ AUTOMOBILTECHNISCHE ZEITSCHRIFT,
vol. 85, no. 3, mars 1983, pages 136-137,
Schwäbisch Gmünd, DE;
"ZelligesUrethan-Elastomer für Personenwa-
gen-Hinterachse"**

(73) Titulaire : **CAOUTCHOUC MANUFACTURE ET
PLASTIQUES SOCIETE ANONYME
143 bis, rue Yves Le Coz
F-78000 Versailles (FR)**

(72) Inventeur : **Larrivee, Guy
18, rue du Village
Saint-Léger-des Vignes F-58300 Decize (FR)**
Inventeur : **Parisot, Patrick
24, Place de Beaume
F-78990 Elancourt (FR)**

EP 0 363 271 B1

# Description

La présente invention est relative au domaine des suspensions à grande flexibilité, notamment les suspensions pour automobiles et toutes les applications dérivées utilisant une grande variation de rigidité sur la course utile d'une butée de limitation de débattement.

Elle est plus particulièrement appropriée aux suspensions à ressort hélicoïdal entourant la tige de l'amortisseur hydraulique associé et s'emploie nécessairement guidée par ladite tige, ses propriétés étant obtenues par optimisation des formes d'une longue butée en composition élastomérique compacte, concentrique à la tige de l'amortisseur.

La réalisation de butées additionnelles à une suspension de type automobile fait l'objet de nombreuses recherches d'amélioration. En effet, les progrès du confort conduisent les constructeurs d'automobiles à rechercher, pour la butée de limitation du débattement, une progressivité de rigidité telle, qu'aujourd'hui, les butées de limitation de débattement de ce type doivent être en contact permanent même dans les utilisations les plus allégées du véhicule, et jouent ainsi, de plus en plus souvent, un rôle non négligeable de suspension auxiliaire. C'est un fait mathématique que, additionnée en parallèle à une suspension à rigidité généralement constante sur une grande course, la suspension auxiliaire doit apporter une variation très rapide mais progressive de rigidité. Ainsi, la somme de cette rigidité généralement constante de la suspension principale et de la rigidité progressive de la suspension auxiliaire, a, en fonction des efforts, une variation modérée, par exemple suivant une courbe parabolique et, par conséquent, à sous-tangente constante, pour assurer une suspension à fréquence propre constante malgré les variations de la charge.

La tendance dans la recherche du confort chez les constructeurs d'automobiles conduit même à des solutions dans lesquelles les rigidités croissent, en fonction des efforts, plus rapidement que selon la loi parabolique, ce qui implique, pour la suspension auxiliaire, une possibilité de variation de rigidité dans un rapport de dix et même vingt sur sa course utile qui peut atteindre le décimètre.

Il était, jusqu'alors, de règle très courante de disposer une butée de fin de course de suspension sur la tige de l'amortisseur hydraulique, les efforts en fin de course atteignant couramment cinq cents à sept cents décaNewton sur une voiture de taille moyenne dont le ressort porte, par exemple, deux cents à deux cent cinquante kilos en charge statique.

Dans les solutions connues, la rigidité additionnelle, lorsqu'elle n'est pas obtenue par l'artifice de spires venant en contact sur le ressort à boudin, est apportée par une pièce en caoutchouc implantée indépendamment de la suspension, de forme souvent cylindroconique ou ogivale pour obtenir la variation de rigidité souhaitée.

Parmi les premières applications de formes apportant une certaine progressivité dans la variation de rigidité à une butée en caoutchouc, on peut citer les inventions décrites dans les brevets FR-A- 969 407 de HENSS et THIEMANN, FR-A- 1 052 883 de RUEGG et US-A- 3 037 764 de PAULSEN.

Un exemple d'amélioration de la flexibilité de telles butées est décrit dans le brevet US-A- 4 681 304 de CHRYSLER MOTORS où "une butée de compression axiale est formée de deux parois cylindriques concentriques reliées par une pluralité de petits ponts en forme de trous borgnes, la hauteur étant sensiblement égale au diamètre".

Pour des raisons de flambage en service, les types de butées précédemment décrits, qui sont utilisés sans guidage par la tige de l'amortisseur, présentent - nécessairement - une hauteur peu supérieure à la valeur du diamètre (au plus une fois et demie) et, par conséquent, une limite dans la course utile sur laquelle peut s'opérer la variation de rigidité.

Une génération plus récente de butées additionnelles de limitation progressive du débattement a été rendue possible par les propriétés mécaniques d'élastomères cellulaires de polyuréthane, la variation progressive de rigidité en fonction de l'écrasement étant une caractéristique interne du matériau.

Un exemple de butée à base de polyuréthane cellulaire est donné dans le brevet DE-B-1 238 278 de LEMFORDER KUNSTSTOFF et utilise la conjugaison du caractère cellulaire du matériau et d'un creux interne où l'expansion peut, en outre, être dirigée.

Un exemple de suspension auxiliaire en polyuréthane cellulaire est décrit dans le brevet FR-A-2 188 736 de KLEBER COLOMBES où la variation de rigidité est obtenue par la variation de l'appui progressif sur les faces bisautées d'éléments unitaires superposables.

Ces dispositifs, en polyuréthane cellulaire, utilisent un matériau qui, non seulement, est onéreux mais présente également l'inconvénient d'être sensible à l'eau, ce qui se traduit par deux phénomènes : une absorption d'humidité ambiante, due au caractère cellulaire du matériau conduit à une sensibilité au gel, aux températures inférieures à zéro degré qui provoque la destruction des cellules; d'autre part, une sensibilité chimique à l'humidité rencontrée dans un passage de roue se traduit par une hydrolyse de la matière et sa destruction prématurée.

La présente invention a pour objectif de proposer une suspension auxiliaire monobloc offrant une variation de rigidité sur une grande course utile, c'est-à-dire présentant un facteur de forme, défini par le rapport de la hauteur au diamètre externe, d'au moins 2,5 et réalisée dans un matériau peu onéreux et insensible à l'humidité.

L'invention représente l'aboutissement d'une recherche des formes optimales pour satisfaire la progressivité recherchée, en utilisant le guidage du dispositif par la tige d'amortisseur.

L'invention est donc un ressort de compression du type connu du document DE-A-3151771, monobloc, de forme quasi-tubulaire, en matériau élastomérique compact, constituant une suspension auxiliaire pour dispositif de suspension automobile ou analogue. Ledit ressort est constitué d'une pluralité de nervures et de parties de diamètres variables ayant des zones de surface extérieure bombée et présentant une caractéristique de rigidité non linéaire. Ledit ressort présente un facteur de forme, rapport de sa hauteur à l'état libre à son diamètre le plus extérieur, au moins égal à 2,5, et est pourvu d'une pluralité de courts éléments cylindriques s'appuyant, à faible frottement, sur une tige d'amortisseur qui guide ledit ressort intérieurement. La progressivité de rigidité est assurée, lors de la déformation en compression axiale, par des nervures de renfort s'étendant radialement vers l'extérieur et des olives déformables ayant leur convexité tournée vers l'extérieur, chaque olive comportant, dans son plan équatorial, une gorge interne, la paroi en composition élastomérique compacte présentant une section sensiblement constante dans les zones séparant deux nervures de renfort consécutives.

L'invention est caractérisée en ce que les nervures (18) alternent axialement avec les olives (17) et y sont raccordées par des congés toriques (19), en ce que les nervures (18) ont une forme essentiellement annulaire, en ce que leur diamètre extérieur dans leur plan central, à l'état libre du ressort, est supérieur au diamètre des olives (17) dans leur plan équatorial, et en ce que chaque nervure (18) comporte, dans son plan central, une gorge interne (16), chacun desdits courts éléments cylindriques (15) du ressort étant ainsi situé radialement sur la face interne du ressort et axialement au niveau desdits congés toriques (19) entre deux gorges internes (16) adjacentes.

Le guidage par la tige d'amortisseur, avec faible frottement sur de courts éléments cylindriques, s'avère nécessaire car un dimensionnement correct conduit à des valeurs d'élancement d'une pièce quasi-tubulaire telles qu'aucune stabilité ne serait possible. Une réaction mesurable sur l'appui entre deux plans extrêmes n'est concevable que sous réserve du guidage par une tige interne, solidaire de l'un des plans d'appui. Ce guidage, par de multiples courts éléments cylindriques se fait donc avec des frottements à déplacements différentiels, répartis sur la course, ceci étant une des caractéristiques de l'invention.

La solution adoptée, qui permet la variation progressive de rigidité sur une longue course utile, n'entame en rien la longévité de la pièce comme le confirme la tenue sur bancs d'essai dynamique représentatifs de l'utilisation.

Les caractéristiques et avantages de l'invention seront mieux compris à la lecture de la description accompagnant les dessins, dans lesquels :

- la figure 1 est une coupe axiale montrant la position de la suspension auxiliaire sur voiture ;
- la figure 2 est une coupe de la suspension auxiliaire selon l'invention, suivant l'axe de la tige d'amortisseur ;
- la figure 3 montre, sur un graphique, la réaction axiale de la suspension auxiliaire dans le plan force-déplacement ;
- la figure 4 représente, en coupe axiale, la suspension auxiliaire à son écrasement maximal admissible ;
- la figure 5 illustre, sur une même coupe axiale, la position à mi-course de la suspension auxiliaire, position d'usage fréquent.

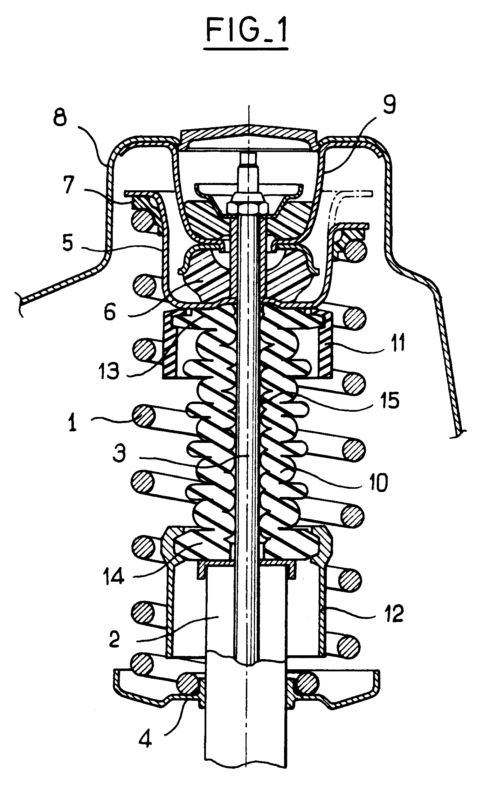

La figure 1 représente la coupe axiale d'une suspension classique d'automobile assurée par un ressort hélicoïdal (1) à flexibilité sensiblement constante sur une grande course. Il est à noter que la disposition s'applique à une suspension où, généralement, le type Mac Phearson est équipé d'un amortisseur hydraulique (2) auquel est fixé le moyeu, l'ensemble formant un "strut" qui pivote autour de la tige d'amortisseur (3), aussi bien qu'à une suspension arrière ou à un "faux Mac Phearson" où le bas de l'amortisseur téléscopique exerce la charge permanente sur un bras de suspension, non représenté, à travers l'appui du ressort hélicoïdal (1) par une coupelle (4) fixée au tube d'amortisseur.

Dans la disposition représentée, la coupelle de fixation supérieure (5) du ressort hélicoïdal (1) reçoit la charge du véhicule à travers une fixation élastique précontrainte (6) sur laquelle repose le passage de roue (8) par un renfort embouti (9). Un filtrage acoustique peut être assuré par un appui élastique (7) du ressort hélicoïdal (1) sur sa coupelle de fixation supérieure (5). La flexibilité de ladite fixation élastique précontrainte (6) étant en série avec le reste de la suspension, la suspension auxiliaire (10), objet de l'invention, vient additionner sa rigidité, en parallèle avec celle du ressort hélicoïdal (1). La fonction suspension auxiliaire est assurée par une butée à caractéristique de rigidité non linéaire, par un appui permanent entre la coupelle de fixation supérieure (5) et le corps de l'amortisseur hydraulique (2).

Ladite suspension auxiliaire (10) comporte, dans la variante illustrée, à son extrémité supérieure, un disque (13), en soi connu, qui en est partie intégrante et est destiné à la fixation d'un anneau de confinement (11), clipsé à force, dans une gorge appropriée, sur deux faces coniques dudit disque de l'extrémité supérieure (13).

L'entrée en contact par le diamètre extérieur de la suspension auxiliaire (10), arrivée en fin de course sur cet anneau de confinement (11), accroît de manière importante la rigidité. Dans d'autres applications, ne disposant pas de la flexibilité en série apportée par la fixation élastique précontrainte (6), l'anneau de confinement (11) n'est pas nécessaire.

Ces variantes, non représentées, qui utilisent le même principe de suspension auxiliaire avec guidage par la tige de l'amortisseur et frottement sur de courts éléments cylindriques, font donc partie du cadre de l'invention.

Symétriquement, la suspension auxiliaire (10) comporte, dans la variante illustrée, un disque de l'extrémité inférieure (14), avec deux faces coniques, servant au clipsage d'un cache de protection (12), destiné à préserver de toutes projections la face d'appui sur l'extrémité supérieure de l'amortisseur hydraulique (2) dans laquelle pénètre, lors des débattements, la tige d'amortisseur (3), avec des joints particulièrement fragiles.

Dans d'autres applications, non représentées, le disque de l'extrémité inférieure est utilisé pour la fixation d'un soufflet d'étanchéité, enfermant cette même zone fragile.

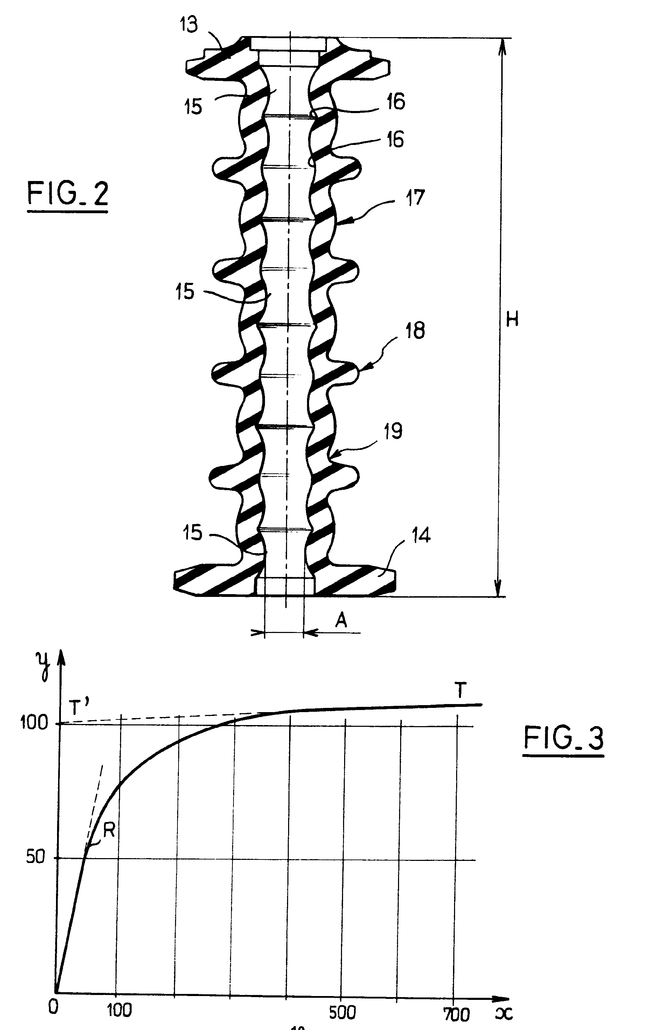

La figure 2 est une coupe axiale de la suspension auxiliaire (10), à caractéristique de rigidité non linéaire, lorsqu'elle est à l'état libre, occupant alors sa hauteur totale (H).
Avant montage, lorsqu'elle est démunie de la tige d'amortisseur (qui lui sert impérativement de guide en cours de fonctionnement), la suspension auxiliaire (10), qui est très souple, a une position de repos à peu près rectiligne. Les parties internes qui viennent prendre appui, en fonctionnement, sur la tige d'amortisseur se présentent sous forme de courts éléments cylindriques (15), interrompus, de diamètre (A) très voisin de celui de la tige d'amortisseur.
Ces courts éléments cylindriques (15), représentés au nombre de dix dans la variante illustrée, sont séparés par des gorges internes (16), en retrait de dix à quinze pour cent du diamètre de la tige d'amortisseur (3).
Ici au nombre de onze, elles sont ménagées, de façon à peu près identique, aussi bien dans le plan de nervures de renfort (18), ici au nombre de quatre, que dans le plan équatorial d'olives déformables (17), ici au nombre de cinq, de surface extérieure très voisine de la sphère.

Un autre exemple intéressant, non représenté, comprendrait trois nervures de renfort (18) et quatre olives déformables (17), dans les mêmes rapports d'épaisseur.

Les nervures de renfort (18) et les olives déformables (17) successives sont raccordées entre elles, extérieurement, par un congé de forme torique (19) de façon que la section de la composition élastomérique constitutive de la suspension auxiliaire (10) demeure sensiblement constante, sur toute sa hauteur, entre cette surface extérieure ainsi annelée et la paroi formée des gorges internes (16) raccordant les courts éléments cylindriques (15). Dans le nombre total de gorges internes (16), sont comprises les gorges extrêmes situées dans le plan du disque de l'extrémité supérieure (13) et du disque de l'extrémité inférieure (14).

Ces gorges extrêmes se poursuivent par un dégagement cylindrique légèrement plus large afin de ne pas serrer sur la tige d'amortisseur au débouché sur les faces d'appui. Celles-ci ont une forme conjugée à celle des solides sur lesquels elles reposent, respectivement la coupelle de fixation supérieure du ressort et le plan d'extrémité du corps de l'amortisseur hydraulique.

La figure 3 montre, sur un graphique, la relation entre la réaction axiale sur lesdites faces d'appui de la suspension auxiliaire et l'écrasement à partir de la hauteur à l'état libre.

La courbe obtenue est représentative du comportement d'une réalisation pratique constituant une suspension auxiliaire d'une hauteur à l'état libre (H) de 145 millimètres, d'un diamètre externe mesuré au niveau du disque de l'extrémité inférieure (14) de 58 millimètres, d'un diamètre interne (A) de 11 millimètres dans les courts éléments cylindriques (15) et comportant quatre nervures de renfort (18) de diamètre extérieur (D) 40 millimètres et cinq olives déformables (17) de diamètre équatorial 25 millimètres.

Le facteur de forme (H/D) est donc ici égal à 3,6. Cet exemple numérique est caractéristique d'une suspension auxiliaire ayant les dimensions précitées et réalisée dans une composition élastomérique d'une dureté de 55 Unités Shore A ou DIDC. L'axe des abscisse (Ox) représente la réaction axiale, en décaNewton, l'axe des ordonnées (Oy) exprimant, en millimètres, l'écrasement correspondant.

A partir de l'origine, la courbe comporte une première partie, rectiligne (OR) qui exprime une rigidité à peu près constante et de valeur encore faible même dans la partie d'usage statique. A l'équilibre, la butée progressive fait fonction de suspension auxiliaire, additive à la flexibilité de suspension du ressort principal.

Dans l'exemple décrit, la réaction axiale de la suspension auxiliaire atteint environ 80 décaNewton lorsque l'écrasement est de 100 millimètres, soit une rigidité de 0,8 daN/mm, valeur infime qui doit être insensible, même à l'entrée en contact de la suspension auxiliaire (en principe dans une position détendue de la roue).
La partie rectiligne (OR) se prolonge par une courbe RT qui rend compte de la progressivité de rigidité de la suspension auxiliaire, la réaction élastique ainsi que la rigidité s'accroissant jusqu'à une pente finale asymptotique (TT') représentative de la rigidité de fin de course qui peut atteindre vingt fois la rigidité initiale représentée par la pente de la partie rectiligne (OR). La valeur numérique représentative de la rigidité de fin de course, qui diffère selon les applications, dépendra essentiellement du mode de fixation de l'ensemble de suspension.

Lorsqu'une fixation élastique précontrainte apporte une rigidité élevée mais en série avec la fonction butée de limitation de débattement, il est nécessaire de bloquer la fin de l'écrasement par la mise en place de l'anneau de confinement (11) qui enferme le diamètre extérieur de la suspension auxiliaire (10) écrasée au maximum et confine la matière, compte tenu du fait qu'un élastomère présente une déformabilité volumétrique très réduite.

Dans des dispositions différentes, il est possible de s'affranchir de l'anneau de confinement (11) et laisser la suspension auxiliaire (10) s'épanouir en diamètre dans la zone d'écrasement maximal. Sa courbe de rigidité présente, alors, une asymptote finale (TT') de plus forte pente, correspondant, par exemple, à dix fois la rigidité initiale illustrée par la partie rectiligne (OR) de la courbe.

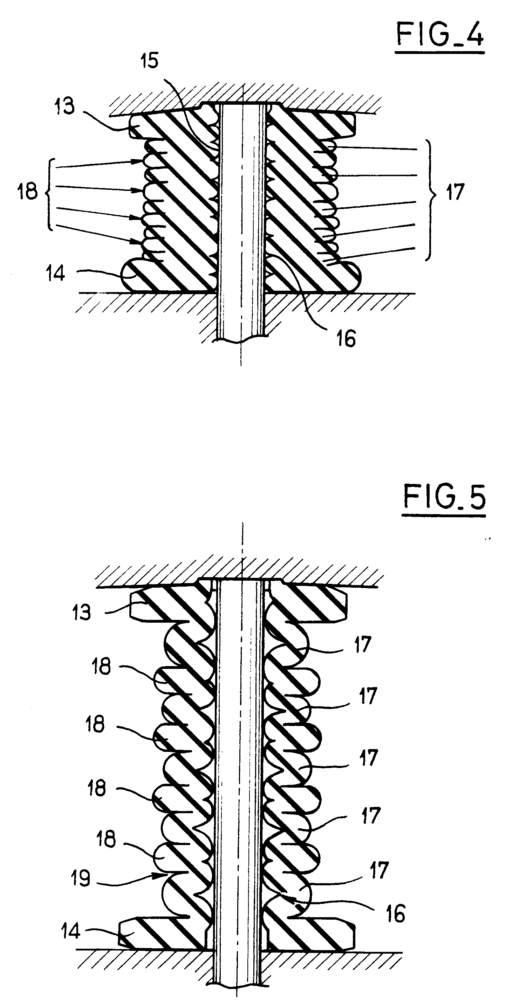

La figure 4 représente, en coupe axiale, la suspension auxiliaire (10) dans une situation voisine de l'écrasement maximal admissible, par exemple à cent millimètres de course pour une hauteur libre initiale de 145 millimètres illustrée par l'exemple de réalisation pratique précédemment décrit.

Dans ce cas l'écrasement relatif de 69 % de l'ensemble est inégalement réparti entre les différents éléments constitutifs de la suspension auxiliaire et il est très supérieur dans les olives déformables (17). Lesdites olives déformables (17), interposées entre les nervures de renfort (18) voient leur diamètre s'élargir jusqu'à une valeur pratiquement égale au diamètre des nervures de renfort (18). La suspension auxiliaire en composition élastomérique, écrasée dans son ensemble, se comporte là comme le ferait un cylindre massif de même composition et de même encombrement ayant une hauteur libre correspondant sur la courbe à l'intersection (T') de l'asymptote (TT') avec l'axe (Oy).
La rigidité représentée par la pente de l'asymptote (TT') de la courbe est équivalente à celle d'un bloc de caoutchouc annelé, qui, à la cote représentée, supporterait des pressions de 15 bars. Ces pressions peuvent aisément être portées à 30 voire 40 bars, dans un choc dynamique, sans provoquer de détérioration, pourvu que l'encombrement diamétral soit possible sans dépasser les diamètres des disques d'extrémités supérieure (13) et inférieur (14). La surface interne, alors en contact avec la tige d'amortisseur, se réduit à une succession de courts éléments cylindriques (15), où la pression vient s'exercer sur la tige d'amortisseur, les gorges internes (16) étant réduites à une épaisseur infime.

La friction exercée perpendiculairement à cette pression participe hautement à l'amortissement du choc à des vitesses différentes pour chacun des courts éléments cylindriques. Il en résulte que la formulation de la composition élastomérique constitutive de la suspension auxiliaire revêt une grande importance pour l'efficacité de fonctionnement. Elle doit être optimisée de façon à ce que son coefficient de friction sur la tige d'amortisseur soit abaissé jusqu'à une valeur compatible avec les propriétés de résistance dynamique, permettant la restitution quasi-intégrale de l'énergie accumulée élastiquement.

La figure 5 représente, également en coupe axiale, une position de compression intermédiaire de la suspension auxiliaire. Dans cette configuration est mise à profit au plus haut point la caractéristique de rigidité non linéaire de la butée progressive.

En effet, dans cette disposition fréquemment rencontrée, les nervures de renfort (18) sont assez peu sollicitées par la charge axiale qui est de l'ordre de 50 à 60 daN dans l'exemple pratique précédemment décrit. Leur rôle se limite à servir de points d'appui - à peu près indéformables à cette valeur - pour le basculement des olives déformables (17), lorsque disparaît par pincement le congé torique (19).

Lesdites olives déformables (17) se trouvent alors arc-boutées entre l'appui des courts éléments cylindriques (15) sur la tige d'amortisseur et lesdites nervures de renfort (18).

Se rapportant au fait que, par définition, la section des olives déformables (17) est constante, par exemple de l'ordre de 3 centimètres carrés pour la réalisation pratique précédemment définie, il est surprenant de constater que la contrainte normale de compression est, dans cette disposition, plus élevée que dans le cas où l'écrasement est maximal décrit à la figure 4.

C'est, en effet, que les olives déformables (17) sont utilisées, sur toute la course utile, en plein flambage, depuis leur forme initiale quasi-sphérique jusqu'à leur écrasement total sous compression maximale sans que la contrainte dans une direction perpendiculaire à leur épaisseur, c'est à dire parallèle à la paroi, varie notablement. De ce fait, il est aisément compréhensible que l'optimisation de la courbe de rigidité soit considérablement influencée par la valeur du congé torique (19) qui encastre, jusqu'à son premier effondrement, par flexion, le pied des olives déformables (17).

Dans une seconde phase, le diamètre des olives déformables (17) s'épanouit jusqu'à un second effondrement au fond des gorges internes (16), sollicitées à la fois par une compression axiale et une traction circonférentielle due à l'accroissement du diamètre.

Cette connaissance du comportement mécanique interne de la suspension auxiliaire sous déformation autorise une approche quantitative du module de cisaillement pur pour la composition élastomérique et permet d'obtenir une courbe de rigidité progressive parfaitement adaptée aux caractéristiques de l'application. La forme donnée au fond des gorges internes (16) permet de déplacer, sur le graphique, le décrochement par rapport à la partie rectiligne initiale (OR), en accroissant ou en réduisant le raccordement courbe à rigidité très variable.

L'ordre de grandeur de la densité d'énergie élastique accumulée dans la suspension auxiliaire, à la valeur permanente d'écrasement représentée sur la figure 5, ne dépasse guère 180 à 200 Joules par kilogramme, pour l'exemple de réalisation pratique précédemment défini. Ceci explique une restitution aisée de l'énergie, sans amortissement interne susceptible d'échauffer la suspension auxiliaire en cas de répétitions fréquentes en utilisation.

La suspension auxiliaire, en usage, étant soumise à des sollicitations tout à fait situées dans ce domaine, il est impératif d'optimiser la formulation de la composition élastomérique afin qu'elle présente, à la fois, des qualités de résilience et un coefficient de friction sur la tige de l'amortisseur aussi faible que possible.

Le choix de l'élastomère de base se porte donc, préférentiellement, vers un caoutchouc naturel, un polyisoprène ou un copolymère de styrène et de butadiène, élastomères caractérisés par une bonne tenue à la fatigue répétitive.

L'adjonction de charges appropriées permet d'optimiser cette résistance dynamique et de conférer à la composition élastomérique un coefficient de friction abaissé, par l'addition de charges autolubrifiantes, par exemple. Parmi elles, la paraffine ou les cires microcristallines s'avèrent les plus efficaces pour la réduction du coefficient de friction de la composition élastomérique. Elles sont, préférentiellement, utilisées dans des proportions variant entre deux et vingt parts de la charge autolubrifiante pour cent parts de l'élastomère de base de la matrice. Dix parts de cire microcristalline permettent d'abaisser d'un facteur deux, environ, le coefficient de friction de la composition élastomérique.

Enfin, une protection contre le vieillissement atmosphérique est apportée par les adjuvants classiques des compositions élastomériques tels les antioxydants ou antiozonants. Pour satisfaire les exigences d'une application donnée, il est donc procédé, à la fois, à une optimisation de la formulation de la composition élastomérique et à une optimisation de la forme de la suspension auxiliaire.

Les résultats d'endurance sur banc d'essai représentatif des conditions de service particulièrement sévères confirment l'importance de ces deux optimisations simultanées.

Sur l'exemple de réalisation pratique précité, dans lequel le facteur de forme est égal à 3,6, un essai d'endurance a été pratiqué dans les conditions suivantes : la suspension auxiliaire, de hauteur initiale 145 millimètres a été placée sur le banc d'essai sous une précontrainte de 45 millimètres, ramenant sa hauteur à 100 millimètres.

Elle a été soumise à une déformation cyclique de plus ou moins 40 millimètres, à une fréquence de 1 Hertz, ce qui correspond à un écrasement variant entre 5 et 85 millimètres. L'essai a été arrêté, sans destruction de la suspension auxiliaire, après un million de cycles. En fin d'essai, la température de la suspension auxiliaire était stabilisée à 50°C, sous l'effet de l'échauffement dynamique, ce qui est une température acceptable pour le fonctionnement normal et prouve que quelques Watt, à peine, sont absorbés par la suspension auxiliaire.

L'essai réalisé correspondrait à une utilisation de la suspension auxiliaire en terrain très bosselé, pendant douze jours consécutifs, sans interruption.

La suspension auxiliaire, objet de l'invention, présente, en outre, une grande facilité de fabrication ne mettant en oeuvre que des techniques utilisées de manière classique dans l'industrie de transformation des caoutchoucs.

En effet, le procédé de fabrication le plus usuel sera le moulage, par transfert de matière ou par injection, en moule fermé de forme appropriée, sur un axe interne, la vulcanisation rapide dans l'empreinte donnant à la suspension auxiliaire sa forme définitive, non réversible. Les seules difficultés de fabrication pourraient résulter de la forme interne, légèrement annelée, au stade de l'extraction de l'axe intérieur de moulage. Ces difficultés sont aisément surmontées par le module modéré de la composition élastomérique très résiliente et par le faible coefficient de friction, caractéristique fonctionnelle indispensable. Un démoulage par action de l'air comprimé est, d'ailleurs, couramment pratiqué dans l'industrie de transformation du caoutchouc.

En résumé, la suspension auxiliaire objet de l'invention apporte une solution particulièrement économique et robuste, puisqu'insensible à l'hydrolyse, aux grandes variations progressives de rigidité, cumulée à la fonction de limitation des débattements pour une suspension d'automobile à grande course.

L'optimisation des formes caractéristiques permet de moduler les lois de variation de la rigidité de la suspension auxiliaire en agissant sur les congés toriques de raccordement des nervures de renfort et des olives déformables, sur la forme des fonds de gorges internes et, de manière évidente, sur le nombre et sur les rapports d'encombrements relatifs des nervures de renfort et des olives déformables.

La disposition de la suspension auxiliaire sur la tige d'amortisseur qui lui sert impérativement de guidage, permet d'intégrer facilement des fixations d'anneaux de confinement complémentaires, des caches de protection ou des soufflets d'étanchéité sans compliquer sa conception monobloc et très légère.

## Revendications

1. Ressort de compression monobloc, de forme quasi-tubulaire, en matériau élastomérique compact, constituant une suspension auxiliaire pour dispositif de suspension automobile ou analogue, ledit ressort étant constitué d'une pluralité de nervures et de parties de diamètres variables ayant des zones de surface extérieure bombée et présentant une caractéristique de rigidité non linéaire, ledit ressort présentant un facteur de forme, rapport de sa hauteur à l'état libre à son diamètre le plus extérieur, au moins égal à 2,5, ledit ressort étant pourvu d'une pluralité de courts éléments cylindriques (15) s'appuyant, à faible frottement, sur une tige d'amortisseur (3) qui guide ledit ressort intérieurement, la progressivité de rigidité étant assurée, lors de la déformation en compression axiale, par des nervures de renfort (18) s'étendant radialement vers l'extérieur et des olives déformables (17) ayant leur convexité tournée vers l'extérieur, chaque olive comportant, dans son plan équatorial, une gorge interne (16), la paroi en composition élastomérique compacte présentant une section sensiblement constante dans les zones séparant deux nervures de renfort (18) consécutives,

caractérisé en ce que les nervures (18) alternent axialement avec les olives (17) et y sont raccordées par des congés toriques (19),

en ce que les nervures (18) ont une forme essentiellement annulaire et leur diamètre extérieur dans leur plan central, à l'état libre du ressort, est supérieur au diamètre des olives (17) dans leur plan équatorial, et

en ce que chaque nervure (18) comporte, dans son plan central, une gorge interne (16),

chacun desdits courts éléments cylindriques (15) du ressort étant ainsi situé radialement sur la face interne du ressort et axialement au niveau desdits congés toriques (19) entre deux gorges internes (16) adjacentes.

2. Ressort de compression monobloc selon la revendication 1, caractérisée en ce que la variation progressive de la rigidité de compression axiale atteint un rapport au moins égal à dix et, préférentiellement, au moins égal à vingt sur au moins la moitié de la course totale d'écrasement axial, grâce au dimensionnement des congés toriques (19), des profondeurs des gorges internes (16) et de l'encombrement relatif des nervures de renfort (18) et des olives déformables (17).

3. Ressort de compression monobloc selon la revendication 2, caractérisée en ce que le nombre des nervures de renfort (18) est égal à quatre et celui des olives déformables (17) est égal à cinq, le nombre des courts éléments cylindriques (15) étant alors de dix et celui des gorges internes (16) de onze.

4. Ressort de compression monobloc selon la revendication 2, caractérisée en ce que le nombre des nervures de renfort (18) est de trois et celui des olives déformables (17) est de quatre, le nombre des courts éléments cylindriques (15) étant alors de huit et celui des gorges internes (16) de neuf.

## Patentansprüche

1. Einstückige Druckfeder, die quasi-aufgebaut ist, aus kompaktem Elastomermaterial besteht und eine Hilfsaufhängung zu einer Aufhängevorrichtung in Kraftfahrzeugen oder dergleichen bildet, wobei die Feder gebildet ist aus einer Vielzahl von Rippen und Abschnitten veränderlichen Durchmessers mit bombierten Außenoberflächenbereichen und einer nicht linearen Steifigkeitskennlinie, eine Formzahl (Verhältnis ihrer Höhe im unbelasteten Zustand zu ihrem Durchmesser über alles) von zumindest 2,5 aufweist und mit einer Vielzahl kurzer zylindrischer Elemente (15) versehen ist, die sich mit geringer Reibung auf einer die Feder im Inneren führenden Hubstange des Stoßdämpfers (3) abstützen, wobei bei einer Verformung durch axiale Kompression ein Anstieg der Steifigkeit durch sich radial nach außen erstreckende Verstärkungsrippen (18) und verformbare, nach außen konvexe Oliven (17) erfolgt, von denen jede in ihrer äquatorialen Ebene eine innere Auskehlung (16) aufweist, wobei die aus kompaktem Elastomermaterial bestehende Wand im zwei aufeinanderfolgende Verstärkungsrippen (18) trennenden Bereich einen im wesentlichen konstanten Querschnitt aufweist,

dadurch gekennzeichnet, daß die Verstärkungsrippen (18) eine axiale Wechselfolge mit den Oliven (17) bilden und mit diesen durch torische Ausrundungen ( 19 ) verbunden sind,

daß die Rippen (18) im wesentlichen Ringform aufweisen und ihr Außendurchmesser in ihrer Mittelebene bei unbelasteter Feder größer ist als der Durchmesser der Oliven (17) in ihrer äquatorialen Ebene, und

daß jede Rippe (18) in ihrer Mittelebene eine innere Auskehlung (16) aufweist,

wodurch jedes der kurzen zylindrischen Elemente (15) der Feder radial auf der Innenoberfläche der Feder und axial auf der Höhe der torischen Ausrundung (19) zwischen zwei benachbarten inneren Auskehlungen (16) liegt.

2. Einstückige Druckfeder nach Anspruch 1, dadurch gekennzeichnet, daß die fortschreitende Änderung der axialen Kompressionssteifigkeit ein Verhältnis von mindestens gleich zehn annimmt, vorzugsweise von mindestens gleich zwanzig über mindestens die Hälfte des gesamten axialen Stauchungsweges, und zwar aufgrund der Dimensionierung der torischen Ausrundungen (19), der Tiefe der inneren Auskehlungen (16) und der relativen Abmessungen der Verstärkungsrippen (18) und der verformbaren Oliven (17).

3. Einstückige Druckfeder nach Anspruch 2, dadurch gekennzeichnet, daß die Zahl der Verstärkugnsrippen (18) gleich vier und die der verformbaren Oliven (17) gleich fünf ist, wobei die Zahl der kurzen zylindrischen Elemente (15) dann gleich zehn und die der inneren Auskehlungen (16) gleich elf ist.

4. Einstückige Druckfeder nach Anspruch 2, dadurch gekennzeichnet, daß die Zahl der Verstärkungsrippen (18) gleich drei und die der verformbaren Oliven (17) gleich vier ist, wobei die Zahl der kurzen zylindrischen Elemente (15) dann gleich acht und die der inneren Auskehlungen (16) gleich neun ist.

**Claims**

1. A compression spring, made in one piece, of almost tubular form, of a compact elastomeric material, constituting an auxiliary suspension for an automobile suspension device or the like, said spring being constituted by a plurality of ribs and parts of variable diameters having zones of convex exterior surface and having a non-linear rigidity characteristic, said spring having a form factor, ratio of its height in free state to its outermost diameter, at least equal to 2.5, said spring being provided with a plurality of short cylindrical elements (15) resting, with slight friction, on a shock absorber rod (3) which guides said spring internally, the progressivity of rigidity being ensured, on deformation in axial compression, by reinforcement ribs (18) extending radially towards the exterior, and deformable olives (17), having their convexity turned towards the exterior, each olive comprising, in its equatorial plane, an internal groove (16), with the wall of compact elastomeric composition having a substantially constant section in the zones separating two consecutive reinforcement ribs (18),
characterised in that the ribs (18) alternate axially with the olives (17) and are connected there by toric curvatures (19),
in that the ribs (18) have an essentially annular shape and their exterior diameter in their central plane, in the free state of the spring, is greater than the diameter of the olives (17) in their equatorial plane, and

in that each rib (18) comprises, in its central plane, an internal groove (16),
each of said short cylindrical elements (15) of the spring being thus situated radially on the internal face of the spring and axially at the level of said toric curvatures (19) between two adjacent internal grooves (16).

2. A compression spring, made in one piece, according to Claim 1, characterised in that the progressive variation of the rigidity of axial compression reaches a ratio at least equal to ten and, preferably, at least equal to twenty over at least half of the total course of axial crushing, owing to the dimensioning of the toric curvatures (19), the depths of the internal grooves (16) and the relative space occupied by the reinforcement ribs (18) and the deformable olives (17).

3. A compression spring, made in one piece, according to Claim 2, characterised in that the number of reinforcement ribs (18) equals four and that of the deformable olives (17) equals five, with the number of short cylindrical elements (15) then being ten and that of the internal grooves (16) being eleven.

4. A compression spring, made in one piece, according to Claim 2, characterised in that the number of reinforcement ribs (18) is three and that of the deformable olives (17) is four, with the number of short cylindrical elements (15) then being eight and that of the internal grooves (16) being nine.

# FIG_1

13

15

16

16

17

15

18

19

15

15

14

FIG. 2

H

A

FIG. 3

10

FIG_4

15

13

18

17

14

16

FIG_5

13

18

17

18

17

18

17

18

17

18

17

19

17

14

16

11